Europäisches Patentamt

European Patent Office

Office européen des brevets

(11) Publication number: **0 311 826 B1**

# EUROPEAN PATENT SPECIFICATION

(45) Date of publication of patent specification: **11.03.92** (51) Int. Cl.⁵: **F16C 35/073**

(21) Application number: **88115755.6**

(22) Date of filing: **24.09.88**

(54) **Bearing fastened to the shaft by means of a tractive bush.**

(30) Priority: **12.10.87 IT 6785587**

(43) Date of publication of application:
**19.04.89 Bulletin 89/16**

(45) Publication of the grant of the patent:
**11.03.92 Bulletin 92/11**

(84) Designated Contracting States:
**DE FR GB SE**

(56) References cited:
**DE-C- 277 981**
**DE-C- 307 838**
**US-A- 1 251 449**
**US-A- 3 129 038**

(73) Proprietor: **RIV-SKF OFFICINE DI VILLAR PER-OSA S.p.A**
**Via Mazzini 53**
**I-10123 Torino(IT)**

(72) Inventor: **Bermond, Gabriele**
**Viale Rimembranza, 60**
**Pinerolo(IT)**

(74) Representative: **Lotti, Giorgio et al**
**c/o Ing. Barzano' & Zanardo S.p.A. Via Cernaia 20**
**I-10122 Torino(IT)**

## Description

The subject of this invention is a bearing fastened to a shaft by means of a tractive bush.

One of the various types of bearings that are usually employed on agricultural, textile and building machinery, is to be noted - unlike the major part of the revolving bearings - for having the hole of the inner ring conically-shaped on which a collar having a tapered external surface and a plane internal surface adhering to the shaft, is inserted. The collar is being wedged by a tractive ring nut with a preset tension between the bearing inner ring and the shaft, obtaining the locking of the bearing. However, this design has some inconveniences: first of all the necessity of realizing a taper in the bearing inner ring and this fact makes it more expensive than the type having a cylindrical inner surface. Another drawback is that this type of bearing does not have suitable side screenings to ensure a good sealing; additional screenings may of course be employed but costs are thus further increased.

US patent No. 1251449 discloses a clamping device for ball bearings consisting of a cylindrical split sleeve on a shaft, said sleeve having a plurality of conical projections and a threaded portion. On such sleeve a further sleeve is arranged, having a plurality of recesses corresponding to the projections of the inner sleeve. The outside of this outer sleeve is cylindrical, and to it the inner race of a ball bearing is fitted.

This previous invention does not provide a sealing to cover the gap between the inner and the outer races of the bearing.

The purpose of the present invention is to avoid the above inconveniences and it proposes to realize a bearing fastened to the shaft by means of a tractive bush, of the kind in which the inner ring of the bearing has a cylindrical inner surface and between the latter and the shaft on which it is assembled, a bushing and a bush are interposed and coupled to each other by means of parallel tapered notches of the bushing which correspond to those of the bush; the notches of the bushing having a threaded part on which a ring nut is screwed; characterized in that the bush has an end flange appointed to realize a sealing against a side of the bearing; the ring nut being equipped with a flange to realize a sealing against the other side of the bearing; the flanges constituting side screenings to cover the gap between the outer race and the inner race of the bearing. A description of the bearing according to the invention now follows, and reference is made to the enclosed drawings:

fig. 1 is the axial section view of a bearing according to the invention;

figs. 2 and 3 respectively the plan view and the axial and front section of a detail of the bearing;

fig. 4 is the axial section of another detail of the bearing;

fig. 5 is an enlarged view of a part of fig. 4;

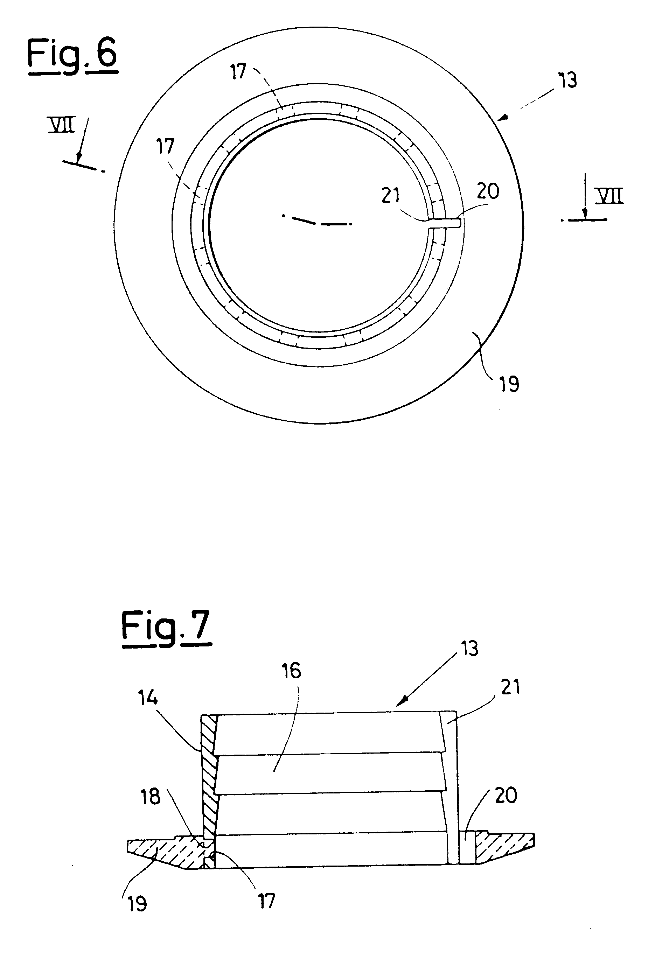

figs. 6 and 7 are respectively the front view of a further detail of the bearing and its section along the mark VII-VII of fig. 6.

On the shaft (not shown) a bushing 10 is inserted, bearing parallel tapered notches 11 for a first length, and threaded notches 12 for the next length of its external surface.

A bush 13 is inserted in the first length, and such bush bears a cylindrical outer surface 14 and an inner surface carrying notches 16 corresponding to those 11 of bushing 10.

In the holes 17 of the bush the appendixes 18 of an end flange 19 are inserted. Both the flange 19 and the bush 13 carry axial notches 20 and 21 which allows them some elastic yielding.

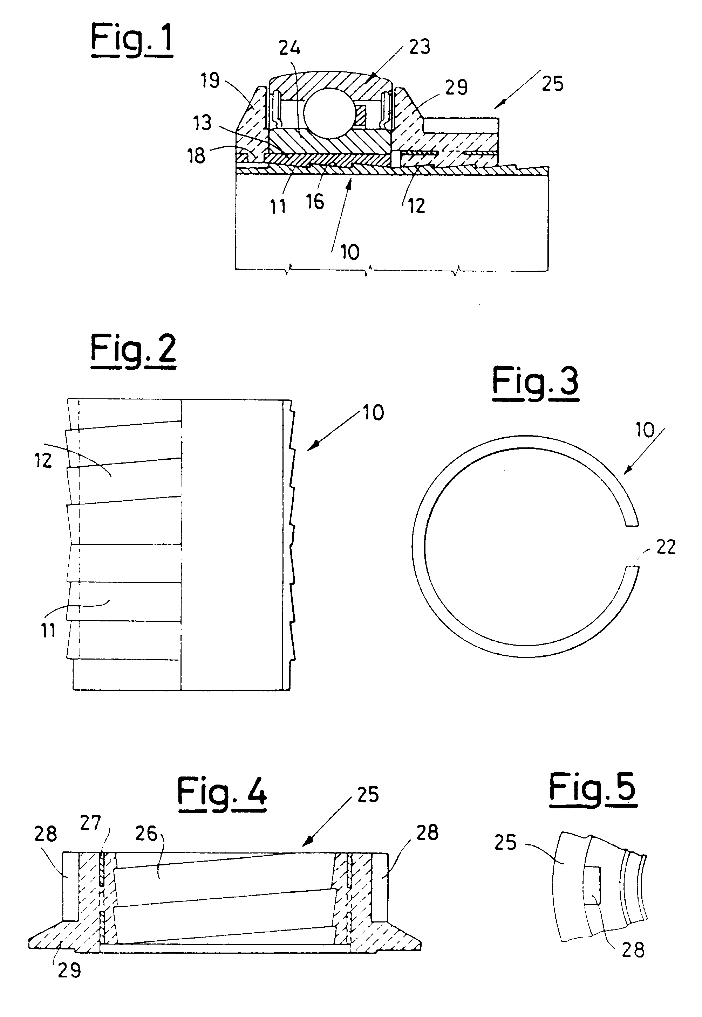

A similar notch 22 is obtained into the bushing 10 which thus resembles an open ring (Fig. 3).

The bearing 23 has the cylindrical surface inner ring 24 and is inserted into the bush 13 by a stop against its flange 19. On the length 12 of the bushing 10 a ring nut 25 is screwed which bears inner threading 26 corresponding to the one 12 of the bush; a sheet tube 27 is embedded into the ring nut which bears four equidistant notches 28 on its outer surface.

During assembly stage, the bushing 10 is inserted on the shaft and the bush 13 is inserted on said bushing together with the bearing 23. When screwing the ring nut 25 on the threaded length 12 of the bushing 10 a traction is exerted on the latter when the flange 29 of the ring nut 25 stops against the bearing 23, and this induces a force of the bushing 10 on the shaft and a force of the bush 13 on the outer ring of the bearing thanks to the tapered notch coupling 11 and 16 between bushing 10 and bush 13, thus holding the unit in its seating.

The flanges 19 and 29 contribute to the required sealing on the bearing and also act as locking elements in the seating. The flange 19 is described as an element that can be separated from the bush 13 to which it is rigidly connected by the teeth 18, however, it can also be an integrating part of the said bush. For the sake of simplicity, the drawings do not illustrate the traditional fastening hook in the position of the ring nut 25 to the bushing 10, even if this is usually required to avoid undesired unscrewings of the said ring nut during operations.

The design and realization of the unit by means of a bushing 10 and a bush 13 interposed between the shaft and the bearing 23 has permitted the inner ring 24 of the said bearing to be kept perfectly cylindrical, thus limiting production expenses according to the purposes of the invention.

## Claims

1. A bearing fastened to a shaft by means of a tractive bush, of the kind in which the inner ring (24) of the bearing has a cylindrical inner surface and between the latter and the shaft on which it is assembled, a bushing (10) and a bush (13) are interposed and coupled to each other by means of parallel tapered notches (11) of the bushing (10) which correspond to those (16) of the bush (13); the notches (11) of the bushing (10) having a threaded part on which a ring nut (25) is screwed, characterized in that the bush (13) has an end flange (19) appointed to realize a sealing against a side of the bearing; the ring nut (25) being equipped with a flange (29) to realize a sealing against the other side of the bearing; flanges (19, 29) constituting side screenings to cover the gap between the outer race and the inner race (24) of the bearing (23).

2. A bearing according to claim 1 characterized in that the flange (19) is assembled on the bush (13) by meshing its radial teeth into corresponding holes (17) of the bush.

3. A bearing according to claim 1 characterized in that the reciprocal coupling surfaces between bushing (10) and bush (13) bear circular tapered notches (11, 16).

## Revendications

1. Un palier fixé sur un arbre au moyen d'une douille de traction du type où la bague intérieure (24) de palier présente une surface intérieure cylindrique et entre la surface susdite et l'arbre. sur lequel il est monté, une douille (10) et un manchon (13) sont interposés et couplés l'une à l'autre au moyen de gradins parallèles effilés (11) de la douille (10) qui correspondent aux gradins (16) de manchon (13); les gradins (11) de la douille (10) ayant une partie filetée sur laquelle une frette (25) est vissée, caractérisé du fait que le manchon (13) a un flasque d'extrémité (19) destiné à rendre étanche un côté du palier; la frette (25) étant équipée d'un flasque (29) pour rendre étanche l'autre côté du palier; les flasques (19, 29) faisant fonction d'écrans de protection latéraux pour couvrir l'espace vide entre la piste extérieure et la piste intérieure (24) du palier (23).

2. Un palier selon la revendication 1, caractérisé du fait que le flasque (19) est monté sur le manchon (13) en engrenant ses dents radiales dans des trous correspondants (17) du manchon.

3. Un palier selon la revendication 1, caractérisé du fait que les surfaces d'accouplement réciproques entre douille (10) et manchon (13) présentent des gradins circulaires effilés (11, 16).

## Patentansprüche

1. Befestigung eines Lagers auf einer Welle mittels einer Zughülse, wobei der Innenring (24) des Lagers eine innere Zylinderfläche besitzt; zwischen besagter Fläche und der Welle, auf der es montiert ist, liegen eine Hülse (10) und eine Buchse (13), die mittels verjüngter paralleler Stufen (11) der Hülse (10), die den Stufen (16) der Buchse (13) entsprechen, aneinander angekuppelt sind; und wobei die Stufen (11) der Hülse (10) einen geschnittenen Teil besitzen, auf dem eine Nutmutter (25) aufgeschraubt ist, dadurch gekennzeichnet, daß die Buchse (13) einen Endflansch (19) hat, der zur Abdichtung einer Seite des Lagers bestimmt ist; wobei die Nutmutter (25) über einen Flansch (29) zur Abdichtung der anderen Seite des Lagers verfügt; wobei die Flansche (19, 29) als Seitenschutzschirme fungieren, um den Leerraum zwischen der Außen- und der Innenlaufbahn (24) des Lagers (23) zu decken.

2. Ein Lager nach Anspruch 1 dadurch gekennzeichnet, daß der Flansch (19) auf der Buchse (13), durch Eingreifen seiner Radialzähne in entsprechende Bohrungen (17) der Buchse, montiert ist.

3. Ein Lager nach Anspruch 1 dadurch gekennzeichnet, daß die gegenseitigen Kupplungsflächen zwischen Hülse (10) und Buchse (13) verjüngte Rundstufen (11, 16) aufweisen.

Fig.1

Fig.2

Fig.3

Fig.4

Fig.5

## Fig.6

## Fig.7